# EUROPÄISCHE PATENTSCHRIFT

(11) **EP 0 915 267 B1**
(45) Veröffentlichungstag und Bekanntmachung des Hinweises auf die Patenterteilung: **27.11.2002**
(21) Anmeldenummer: 98117926.0
(22) Anmeldetag: 22.09.1998
(51) Int. Cl.: F16F 15/26, F02B 75/06

(54) **Brennkraftmaschine mit einer Massenausgleichs-Vorrichtung II. Ordnung**
Combustion engine having a device for second order mass balancing
Moteur à combustion interne comportant un dispositif pour balancer les vibrations de second ordre

(30) Priorität: 07.11.1997 DE 19749300
(43) Veröffentlichungstag der Anmeldung: 12.05.1999
(73) Patentinhaber: Bayerische Motoren Werke Aktiengesellschaft, 80788 München (DE)
(72) Erfinder: Flierl, Rudolf, Dr., 81669 München (DE); Huber, Markus, 80801 München (DE); Jooss, Reinhard, 80939 München (DE)

(56) Entgegenhaltungen:
- EP-A- 0 789 164
- US-A- 2 284 515
- US-A- 3 511 110
- US-A- 3 763 716
- US-A- 4 300 493
- US-A- 5 715 784

## Beschreibung

Die Erfindung bezieht sich nach dem Oberbegriff des Patentanspruches 1 auf eine Brennkraftmaschine mit einer Massenausgleichs-Vorrichtung II. Ordnung, umfassend von einer Kurbelwelle beabstandet in einer von einer ölwanne begrenzten Ölvorratskammer in einem Lagerrahmen angeordnete Ausgleichswellen, die von einer mit der Kurbelwelle in Antriebsverbindung stehenden Ölpumpe angetrieben sind, wobei die Ausgleichswellen über ein Zahnradpaar gegensinnig mit gleicher Winkelgeschwindigkeit drehend angeordnet sind.

Eine derartige Ausgleichs-Vorrichtung II. Ordnung ist beispielsweise aus der US 4 703 725 bekannt. Bei dieser bekannten Anordnung ist die ölpumpe als eine Außenzahnrad-Pumpe mit gleich großen Rädern gestaltet, die zugleich zum Antrieb der gegensinnig drehenden Ausgleichswellen dienen. Eines der Pumpenräder wird von der Kurbelwelle der Brennkraftmaschine aus entsprechend der für die II. Ordnung erforderlichen doppelten Drehzahl gegenüber der Kurbelwelle entsprechend übersetzt angetrieben.

Nachteilig bei dieser Antriebsanordnung ist in Verbindung mit im Durchmesser relativ groß bemessenen Ölpumpen-Zahnrädern die hohe Ölpumpen-Förderleistung, die einer erhöhten Antriebsleistung bedarf verbunden mit höheren Öltemperaturen und der Gefahr stärkeren Ölverschäumens.

Die vorgenannten Probleme sind mit einer aus der EP-A 0 789 166 bekannten Massenausgleichs-Vorrrichtung II. Ordnung behoben, wobei mit einem Hüllgetriebe von der Kurbelwelle aus neben den Ausgleichswellen eine von diesen baulich gesondert angeordnete Ölpumpe angetrieben ist. Bei dieser bekannten Anordnung kann der Durchmesser des Antriebsrades der Ölpumpe unabhängig vom Antriebsrad für die Ausgleichs-Vorrichtung gewählt werden zur Erzielung einer an die Brennkraftmaschine angepaßte Ölpumpen-Förderleistung ohne die vorerwähnten Nachteile.

Nachteilig ist hierbei der mit der unterschiedlichen antriebsseitigen Lagerung verbundene Fertigungsaufwand, da die mit der unabhängig angetriebenen Pumpe fluchtende Ausgleichswelle in einem Gehäusedeckel der Ölpumpe gelagert ist, während die über das Hüllgetriebe direkt angetriebene Ausgleichswelle im Lagerrahmen der Ausgleichs-Vorrichtung gelagert ist. Die Anordnung der Lagerbohrung in unterschiedlichen Teilen, wie dem Lagerrahmen und einem an diesen verschraubten Ölpumpendeckel für mit gegenüber der Kurbelwelle mit doppelter Drehzahl drehenden Ausgleichswellen ist besonders fertigungsaufwendig.

Der Erfindung liegt die Aufgabe zugrunde, eine gattungsgemäße Massenausgleichs-Vorrichtung II. Ordnung mit entsprechender Drehzahl gegenüber der Kurbelwelle über eine in der Drehzahl relativ frei wählbare Ölpumpe anzutreiben.

Diese Aufgabe ist mit dem Patentanspruch 1 dadurch gelöst, daß die bezüglich der Ausgleichswellen mit geringerer Drehzahl angetriebene Ölpumpe über ein drehzahlsteigerndes Getriebe mit einer der Ausgleichswellen in Antriebsverbindung steht und die Ausgleichswellen über ein gesondertes Zahnradpaar miteinander drehverbunden sind.

Die Erfindung bietet den Vorteil einer bezüglich ihrer Drehzahl bzw. Untersetzung frei wählbaren Ölpumpe und außerdem eine gleichartige Lagerung der beiden Ausgleichswellen in einem Lagerrahmen.

Gemäß einer vorteilhaften Ausgestaltung der Erfindung wird vorgeschlagen, daß mehrere baulich nebeneinander angeordnete Ölpumpen über eine gemeinsame Pumpenwelle unter Zwischenschaltung des drehzahlsteigernden Getriebes mit einer Ausgleichswelle einenends in Antriebsverbindung stehen und die Ausgleichswellen andernends mit einem außerhalb des Lagerrahmens auf freien Wellenenden angeordnetem Zahnradpaar miteinander drehverbunden sind.

Die erfindungsgemäße Anordnung des Zahnradpaares der Ausgleichswellen auf deren freien Wellenenden jenseits des Lagerrahmens ergibt sowohl für diesen als auch für Anordnung des Zahnradpaares eine einfachere Gestaltung und kostengünstigere Fertigung. Diese Ausgestaltung unterstützt femer die am anderen Ende des Lagerrahmens vorgesehene Pumpenanordnung mit dem Getriebe ins schnelle, wobei die Anordnung vorzugsweise zweier gleicher Pumpen zur Abdeckung des Volumen-/Druckbedarfes einer Brennkraftmaschine drehzahlabhängig vorteilhaft abdeckbar ist.

Eine kompakte Massenausgleichs-Vorrichtung II. Ordnung ist schließlich dadurch erreicht, daß das drehzahlsteigernde Zahnrad-Getriebe als einzige oder als zusätzliche Ölpumpe dient, wobei das mit doppelter Kurbelwellendrehzahl drehende Abtriebsrad mit einer fluchtend angeordneten Ausgleichswelle drehfest verbunden ist. Eine vereinfachte Montage ist hierfür dadurch erreicht, daß Abtriebsrad und Ausgleichswelle über eine Steckverbindung drehfest verbunden sind, wobei die Ölpumpe mit ihrem Gehäuse am Lagerrahmen anordbar ist.

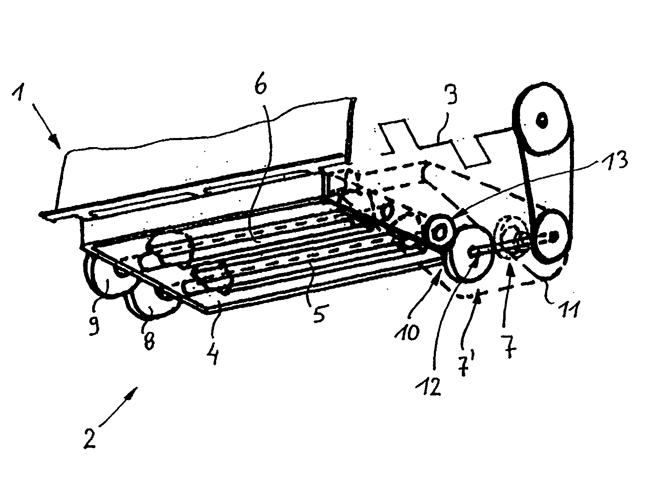

Die Erfindung ist anhand eines in der Zeichnung schematisch dargestellten Ausführungsbeispiels einer Massenausgleichs-Vorrichtung II. Ordnung mit einer Ölpumpe beschrieben.

Eine nicht näher dargestellte Brennkraftmaschine 1 ist mit einer mit 2 bezeichneten Massenausgleichs-Vorrichtung II. Ordnung ausgerüstet. Die Vorrichtung 2 umfaßt von einer Kurbelwelle 3 beabstandet in einer von einer nicht gezeigten Ölwanne begrenzten Ölvorratskammer in einem Lagerrahmen 4 angeordnete Ausgleichswellen 5 und 6, die von einer mit der Kurbelwelle 3 in Antriebsverbindung stehenden Ölpumpe 7 angetrieben sind, wobei die Ausgleichswellen 5, 6 über ein Zahnradpaar 8, 9 gegensinnig mit gleicher Winkelgeschwindigkeit drehend angeordnet sind.

Erfindungsgemäß steht eine bezüglich der Ausgleichswellen 5 und 6 mit geringerer Drehzahl angetriebene Ölpumpe 7 über ein drehzahlsteigerndes Getriebe 10 mit der Ausgleichswelle 5 in Antriebsverbindung, wobei die Ausgleichswellen 5, 6 über ein gesondertes Zahnradpaar 8, 9 miteinander drehverbunden sind.

Um den Volumen-/Druckbedarf der Brennkraftmaschine über ihren gesamten Drehzahlbereich sicherzustellen, sind in einem Gehäuse 11 zwei Ölpumpen 7 und 7' baulich nebeneinander auf einer gemeinsamen Pumpenwelle 12 angeordnet, wobei die Ölpumpe 7 den Bedarf über den gesamten Drehzahlbereich der Brennkraftmaschine sicherstellt und die zweite Ölpumpe 7' ventilabsteuerbar vorzugsweise für einen unteren Drehzahlbereich dient. Die Ölpumpen 7 und 7' stehen über die gemeinsame Pumpenwelle 12 unter Zwischenschaltung des drehzahlsteigernden Getriebes 10 mit der Ausgleichswelle 5 einenends in Antriebsverbindung, wobei die Ausgleichswellen 5, 6 andernends mit einem außerhalb des Lagerrahmens 4 auf freien Wellenenden angeordnetem Zahnradpaar 8 und 9 miteinander drehverbunden sind.

Eine bauliche Vereinfachung ist weiter dadurch erzielt, daß das drehzahlsteigernde Zahnrad-Getriebe 10 als einzige Ölpumpe 7 oder als zusätzliche Ölpumpe 7' dient, wobei das mit doppelter Kurbelwellendrehzahl drehende Abtriebsrad 13 ebenfalls mit der fluchtend angeordneten Ausgleichswelle 5 drehfest verbunden ist. Zur Montageerleichterung sind dabei Abtriebsrad 13 und Ausgleichswelle 5 über eine übliche Steckverbindung drehfest verbunden, wobei die Ölpumpe 7 bzw. die Ölpumpen 7 und 7' mit ihrem jeweiligen Gehäuse 11 am Lagerrahmen 4 anordbar ist bzw. sind. Schließlich kann das Zahnradpaar 8, 9 der Ausbildung einer weiteren Ölpumpe dienen.

## Patentansprüche

1. Brennkraftmaschine mit einer Massenausgleichs-Vorrichtung II, Ordnung,
- umfassend von einer Kurbelwelle (3) beabstandet in einer von einer Ölwanne begrenzten Ölvorratskammer in einem Lagerrahmen (4) angeordnete Ausgleichswellen (5, 6), die
- von einer mit der Kurbelwelle (3) in Antriebsverbindung stehenden Ölpumpe (7) angetrieben sind, wobei
- die Ausgleichswellen (5, 6) über ein Zahnradpaar (8, 9) gegensinnig mit gleicher Winkelgeschwindigkeit drehend angeordnet sind,
**dadurch gekennzeichnet,**
- **daß** die bezüglich der Ausgleichswellen (5, 6) mit geringerer Drehzahl angetriebene Ölpumpe (7, 7') über ein drehzahlsteigemdes Getriebe (10) mit einer der Ausgleichswellen (5, 6) in Antriebsverbindung steht, und
- die Ausgleichswellen (5, 6) über ein gesondertes Zahnradpaar (8, 9) miteinander drehverbunden sind.

2. Brennkraftmaschine nach Anspruch 1, **dadurch gekennzeichnet,**
- **daß** mehrere baulich nebeneinander in einem Gehäuse (11) angeordnete Ölpumpen (7, 7') über eine gemeinsame Pumpenwelle (12) unter Zwischenschaltung des drehzahlsteigernden Getriebes (10) mit einer Ausgleichswelle (5, 6) einenends in Antriebsverbindung stehen, und
- die Ausgleichswellen (5, 6) andernends mit einem außerhalb des Lagerrahmens (4) auf freien Wellenenden angeordnetem Zahnradpaar (8, 9) miteinander drehverbunden sind.

3. Brennkraftmaschine nach Anspruch 1 oder 2, **dadurch gekennzeichnet,**
- **daß** das drehzahlsteigerndes Zahnrad-Getriebe (10) als das Ölpumpe (7 bzw. 7') dient, wobei
- das mit doppelter Kurbelwellendrehzahl drehende Abtriebsrad (13) des Getriebes (10) mit einer fluchtend angeordneten Ausgleichswelle (5, 6) drehfest verbunden ist.

4. Brennkraftmaschine nach Anspruch 3, **dadurch gekennzeichnet,**
- **daß** Abtriebsrad (13) und Ausgleichswelle (5, 6) über eine übliche Steckverbindung drehfest verbunden sind, wobei
- die Ölpumpe (7 bzw. 7') mit ihrem Gehäuse (11) am Lagerrahmen (4) anordbar ist.

5. Brennkraftmaschine nach einem der Ansprüche 1 bis 4, **dadurch gekennzeichnet, daß** das dieAusgleichswellen (5, 6) drehverbindende Zahnradpaar (8, 9) der Ausbildung einer weiteren Pumpe dient.

## Claims

1. An internal combustion engine comprising a second-order counterbalancing device,
- comprising balancing shafts (5, 6) disposed at a distance from a crankshaft (3) in an oil storage chamber bounded by an oil sump in a bearing frame (4),
- the balancing shafts being driven by an oil pump (7) connected for drive purposes to the crankshaft (3) wherein
- the balancing shafts (5, 6) are rotatable by a pair of gearwheels (8, 9) in opposite directions at the same angular speed,
**characterised in that**
- the oil pump (7, 7'), which is driven at a lower speed than the balancing shafts (5, 6), is connected for drive purposes to one of the balancing shafts (5, 6) via a speed-increasing gear unit (10), and
- the balancing shafts (5, 6) are co-rotatably connected to one another by a separate pair of gearwheels (8, 9).

2. An engine according to claim 1, **characterised in that**
- a number of oil pumps (7, 7') disposed side by side in a casing (11) are connected for drive purposes to one end of a balancing shaft (5, 6) via a common pump shaft (12) with interposition of the speed-increasing gear unit (10), and
- the other, projecting ends of the balancing shafts (5, 6) are interconnected for rotation by a pair of gearwheels (8, 9) disposed outside the bearing frame (4).

3. An engine according to claim 1 or claim 2, **characterised in that**
- the speed-increasing gear unit (10) serves as an oil pump (7 or 7'), wherein
- the driven wheel (13) of the unit (10), which rotates at double the crankshaft speed, is co-rotatably connected to an aligned balancing shaft (5, 6).

4. An engine according to claim 3, **characterised in that**
- the driven wheel (13) and the balancing shaft (5, 6) are co-rotatably connected by a conventional plug-in connection, wherein
- the oil pump (7 or 7') and its casing (11) can be disposed on the bearing frame (4).

5. An engine according to any of claims 1 to 4, **characterised in that** the pair of gearwheels (8, 9) for rotatably connecting the balancing shafts (5, 6) are used to form an additional pump.

## Revendications

1. Moteur à combustion interne avec dispositif d'équilibrage des vibrations du second ordre, comprenant, montés à une certaine distance du vilebrequin (3) dans un cadre de paliers (4) logé dans un réservoir d'huile délimité par un carter à huile, des arbres d'équilibrage (5, 6) entraînés par une pompe à huile (7) elle-même entraînée par le vilebrequin, ces arbres (5, 6) tournant à la même vitesse dans des sens opposés, par l'intermédiaire d'une paire de pignons (8, 9)
**caractérisé en ce que**
la pompe tournant à une vitesse plus faible que les arbres d'équilibrage (5, 6) est, par l'intermédiaire d'une transmission multiplicatrice (10), entraînée par un des arbres d'équilibrage (5, 6) qui sont reliés entre eux en rotation par une paire spécifique de pignons (8, 9).

2. Moteur à combustion interne avec dispositif d'équilibrage des vibrations du second ordre, selon la revendication 1,
**caractérisé en ce que**
plusieurs pompes à huile (7, 7'), montées côte à côte, dans un boîtier (11) sur un arbre commun de pompe (12), sont reliées avec interposition de la transmission multiplicatrice de vitesse (10) à l'extrémité d'un des arbres d'équilibrage (5, 6) qui, à leurs autres extrémités, sont solidarisées en rotation par une paire de pignons (8, 9) montés en dehors du cadre de paliers (4) sur les extrémités libres de ces arbres.

3. Moteur à combustion interne avec dispositif d'équilibrage des vibrations du second ordre, selon les revendications 1 ou 2,
**caractérisé en ce que**
la transmission multiplicatrice à pignons (10) sert de pompe à huile (7, 7'), et son arbre de sortie (13), tournant deux fois plus vite que le vilebrequin est solidaire en rotation d'un arbre d'équilibrage (5,6) aligné avec lui.

4. Moteur à combustion interne avec dispositif d'équilibrage des vibrations du second ordre, selon la revendication 3,
**caractérisé en ce que**
le pignon de sortie (13) et l'arbre d'équilibrage (5,6) sont solidarisés en rotation par une liaison à emmanchement usuelle, la pompe à huile (7, 7') pouvant être montée par un boîtier (11) sur le cadre de paliers (4).

5. Moteur à combustion interne avec dispositif d'équilibrage des vibrations du second ordre, selon l'une des revendications 1 à 4,
**caractérisé en ce que**
la paire de pignons (8, 9) reliant en rotation les arbres d'équilibrage (5, 6) sert à réaliser une autre pompe.
